(19) Europäisches Patentamt / European Patent Office / Office européen des brevets

(11) **EP 2 518 990 B1**

(12) **EUROPEAN PATENT SPECIFICATION**

(45) Date of publication and mention
of the grant of the patent:
**18.04.2018 Bulletin 2018/16**

(51) Int Cl.:
**H04N 1/387** (2006.01)

(21) Application number: **12164733.3**

(22) Date of filing: **19.04.2012**

(54) **Automated transaction apparatus and booklet medium scanning method thereof**

Automatische Transaktionsvorrichtung und Buchmedium-Abtastverfahren dafür

Appareil de transaction automatique et son procédé de balayage de support de livret

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2011 JP 2011100603**

(43) Date of publication of application:
**31.10.2012 Bulletin 2012/44**

(73) Proprietor: **Fujitsu Frontech Limited
Inagi-shi,
Tokyo 206-8555 (JP)**

(72) Inventors:
• **Watanabe, Takashi
Gunma 371-0855 (JP)**
• **Shibasaki, Mitsugu
Gunma 371-0855 (JP)**
• **Yoshida, Masayoshi
Tokyo 206-8555 (JP)**
• **Ijiri, Hirokazu
Tokyo 206-8555 (JP)**

(74) Representative: **Hoffmann Eitle
Patent- und Rechtsanwälte PartmbB
Arabellastraße 30
81925 München (DE)**

(56) References cited:
**EP-A2- 0 977 423     JP-A- H11 130 298
US-A1- 2001 030 750**

**Description**

FIELD

The embodiments discussed herein relate to an automated transaction apparatus and a booklet medium scanning method thereof.

BACKGROUND

In EP 0 977 423 A2 there is described an image scanner with compensation for magnification changes. In a process for compensation for real time changes of magnification in an optics system for an image scanner, targets having high-contrast edges, on two edges of an image to be scanned, are scanned along with the image. If magnification changes, the number of pixels between the targets may change. The pixels between the targets are filtered to generate a fixed number of pixels. Photosensor sensitivity compensation values may be separated into factory compensation values and scanner pre-scan compensation values. Factory compensation values are applied before filtering. Differences between factory compensation values and pre-scan compensation values are applied after filtering.

Further, automated transaction machines (ATM) installed at financial institutions and other locations perform money-related transactions such as deposits, withdrawals, bill payments, and transfers according to users' operation inputs.

Such an automated transaction machine is provided with a passbook processing unit for accepting a passbook, printing transaction contents on the passbook, and recording a transaction history.

The passbook processing unit includes a conveyance means, an optical scanning means, a printing means, and others. When the passbook processing unit accepts a passbook in an open state, the conveyance means conveys the passbook to a predetermined position where the optical scanning means captures the image data of the page by scanning the page. Then, after a page mark representing a page number written on the page and the last printed line are confirmed from the image data, the printing means prints transaction contents on the page. After the printing is complete, the conveyance means conveys and ejects the passbook from the automated transaction machine (see, for example, Japanese Laid-open Patent Publication No. 11-1130298).

However, in such a passbook processing unit, the diameter of a conveyance roller of the conveyance means expands (under high temperature) or shrinks (under low temperature) according to temperature, which causes a deviation in an appropriate value of a conveyance amount of a passbook.

As a result, the image data of a page of a passbook captured by the optical scanning means of the passbook processing unit varies in size, which causes a problem of failing to correctly detect a page mark or other writing on the page.

SUMMARY

The present invention has been made in view of the foregoing problem, and an object of the present invention is to provide an automated transaction apparatus and a booklet medium scanning method of the automated transaction apparatus which make it possible to detect writing on a page, regardless of temperature.

According to an aspect, there is provided an automated transaction apparatus which handles a booklet medium. This automated transaction apparatus includes the features of claim 1.

According to another aspect, there is provided a booklet medium scanning method of an automated transaction apparatus. This booklet medium scanning method includes the features of claim 5.

BRIEF DESCRIPTION OF DRAWINGS

FIGS. 1A and 1B are conceptual diagrams for explaining an automated transaction apparatus according to a first embodiment;
FIG. 2 is a perspective view of an ATM according to a second embodiment;
FIG. 3 illustrates an example hardware configuration of the ATM according to the second embodiment;
FIG. 4 illustrates an example configuration of a passbook processing unit provided in the ATM according to the second embodiment;
FIG. 5 is a block diagram illustrating functions of the ATM according to the second embodiment;
FIGS. 6A and 6B are diagrams for explaining print line information and temperature-based correction information set in the ATM according to the second embodiment;
FIG. 7 illustrates an example of writing in a passbook;

FIG. 8 is a flowchart of how an ATM performs a printing process on a passbook according to the second embodiment;
FIG. 9 is a flowchart of how to detect a page mark of a passbook according to the second embodiment;
FIG. 10 is a flowchart of how to detect a last printed line of a passbook according to the second embodiment;
FIG. 11 is a block diagram illustrating functions of an ATM;
FIGS. 12A and 12B illustrate examples of enlargement of a passbook; and
FIGS. 13A and 13B are flowcharts of how to detect a page mark and last printed line of a passbook.

## DESCRIPTION OF EMBODIMENTS

Several embodiments will be described below with reference to the accompanying drawings, wherein like reference numerals refer to like elements throughout.

(First Embodiment)

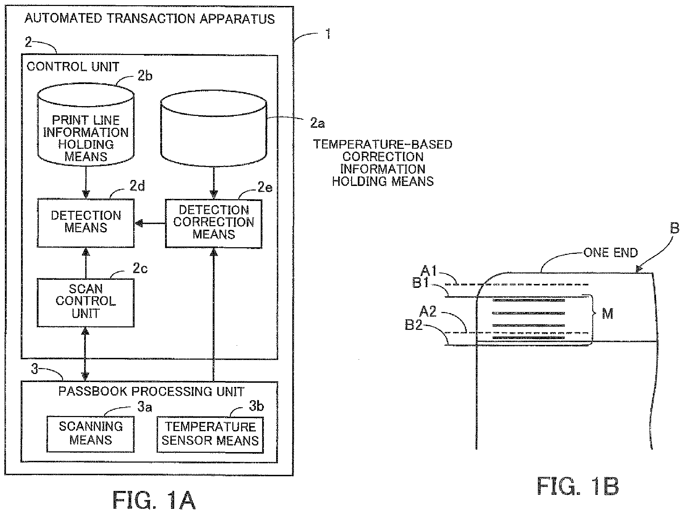

FIGS. 1A and 1B are conceptual diagrams for explaining an automated transaction apparatus according to a first embodiment.

FIG. 1A illustrates an automated transaction apparatus 1, and FIG. 1B illustrates an upper left part of the image data of a page of a passbook B in an open state.

The automated transaction apparatus 1 is designed to obtain image data corresponding to a certain scan number counted from one end of a page of a booklet medium, and to change the scan number of the obtained image data according to temperature. This automated transaction apparatus 1 includes a control unit 2 and a passbook processing unit 3.

The control unit 2 controls the operation of the passbook processing unit 3 in order to perform predetermined processes on the basis of information received from the passbook processing unit 3. The control unit 2 includes a temperature-based correction information holding means 2a, a print line information holding means 2b, a scan control unit 2c, a detection means 2d, and a detection correction means 2e.

The temperature-based correction information holding means 2a holds information on correction values that are set according to temperature for scan numbers counted from one end of a page to be scanned. The correction values held in this temperature-based correction information holding means 2a are determined based on changes occurring in a conveyance amount according to temperature. For example, a correction value 0 is set for normal temperature, a correction value X is set for high temperature, and a correction value Y is set for low temperature. In general, the diameter of a conveyance roller made of rubber or the like expands under high temperature, which increases a conveyance amount. This in turn increases an amount of data that is scanned by a scanning means 3a in a specified time, so that a smaller image of the scanned page is obtained. Under low temperature, on the other hand, the diameter of the conveyance roller shrinks, which reduces a conveyance amount. Therefore, a larger image of the scanned page is obtained.

The print line information holding means 2b holds information on the line numbers of a page corresponding to scan numbers of scanning performed on the page by the scanning means 3a to be described later.

The scan control unit 2c controls a scanning process of the scanning means 3a of the passbook processing unit 3, which will be described later, and receives data captured by the scanning means 3a.

The detection means 2d detects image data corresponding to a certain scan number counted from one end of a page. The detection means 2d also detects image data between first and second scan numbers counted from the one end of the page.

The detection correction means 2e changes the certain scan number of the image data detected by the detection means 2d, counted from the one end of the page, according to a temperature detected by the temperature sensor means 3b. For example, the detection correction means 2e determines a correction value corresponding to the temperature detected by the temperature sensor means 3b with reference to the temperature-based correction information holding means 2e. Then, the detection correction means 2e changes the certain scan number of the image data detected by the detection means 2d, counted from the one end of the page, by the correction value.

In addition, the passbook processing unit 3 performs a process according to a control signal received from the scan control unit 2c of the control unit 2. For example, when the passbook B in an open state is inserted as a booklet medium, the passbook processing unit 3 conveys the passbook B inside, scans the page of the passbook B, and after printing and other processes are complete, ejects the passbook B from the automated transaction apparatus 1. The passbook processing unit 3 includes the scanning means 3a and temperature sensor means 3b.

The scanning means 3a captures the image data of a page of the inserted passbook B. For example, the scanning means 3a is an image scanner, and captures the image of an entire page of the passbook B.

The temperature sensor means 3b detects the temperature of the passbook processing unit 3, and supplies information on the detected temperature to the detection correction means 2e of the control unit 2.

The ' following describes how the above-described automated transaction apparatus 1 scans the passbook B depending on an environmental temperature in order to detect a page mark M written in the passbook B.

In this connection, the page mark M is a barcode representing a page number of a passbook.

First, a user inserts a passbook B in an open state into a predetermined slot of the passbook processing unit 3. The scanning means 3a captures the image of the page of the passbook B inserted and conveyed to a predetermined position, and supplies the image to the scan control unit 2c of the control unit 2. In addition, the temperature sensor means 3b detects information on an environmental temperature, and supplies the information to the detection correction means 2e of the control unit 2.

The detection correction means 2e determines a correction value corresponding to the received temperature with reference to the temperature-based correction information holding means 2a, and notifies the detection means 2d of the correction value.

If there is no need of considering an influence of temperature, the detection means 2d detects, for example, image data between detection positions A1 and A2 corresponding to predetermined scan numbers counted from one end of the page, for detecting the page mark M written in the passbook B.

However, the conveyance amount of the conveyance roller varies according to temperature, so that the image data captured by the scanning means 3a also varies in size. Therefore, as illustrated in FIG. 1B, the detection positions A1 and A2 are shifted (upwards in FIG. 1B), with the result that the page mark M does not appear between the detection positions A1 and A2.

To correct these positions, the detection means 2d changes the detection positions A1 and A2 to detection positions B1 and B2, respectively, on the basis of the correction value corresponding to the temperature, which is supplied from the detection correction means 2e. As a result, the page mark M appears between the detection positions B1 and B2 (FIG. 1B), and the page mark M is detected correctly.

As described above, the automated transaction apparatus 1 changes scan numbers, which are counted from one end of a page of a booklet medium, according to temperature.

By doing so, even in the case where the image data of the page of the booklet medium varies in size due to a change in the conveyance amount of a conveyance means according to temperature, it becomes possible to detect target writing on the page correctly.

(Second Embodiment)

A second embodiment describes the first embodiment more concretely.

This second embodiment uses, as a booklet medium, a passbook which has a plurality of inside papers sewn together to a cover having a magnetic stripe on one side thereof.

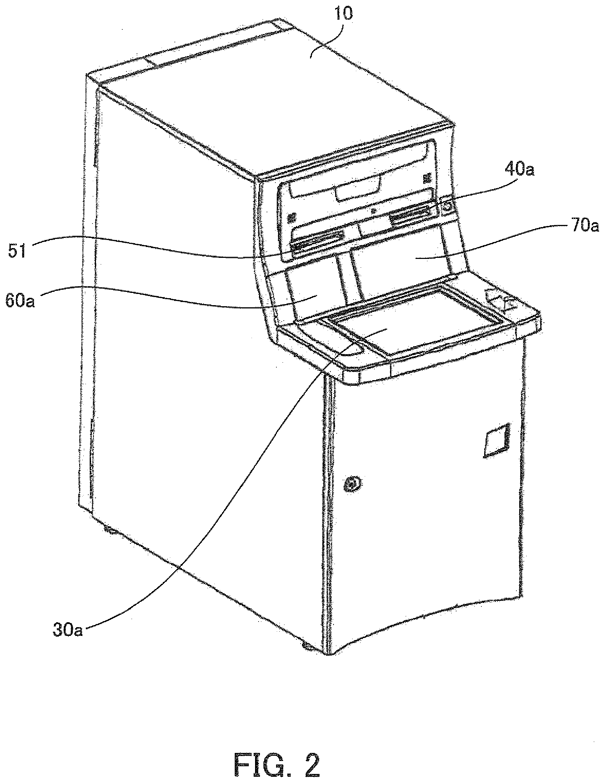

FIG. 2 is a perspective view of an ATM according to the second embodiment.

An ATM 10 has, on the front side thereof, a card processing unit having a card slot 40a, a passbook processing unit having a passbook slot 51, a coin processing unit having a coin tray 60a, and a banknote processing unit having a banknote slot 70a. The ATM 10 also has a display unit with a display part 30a for users' operation inputs and display.

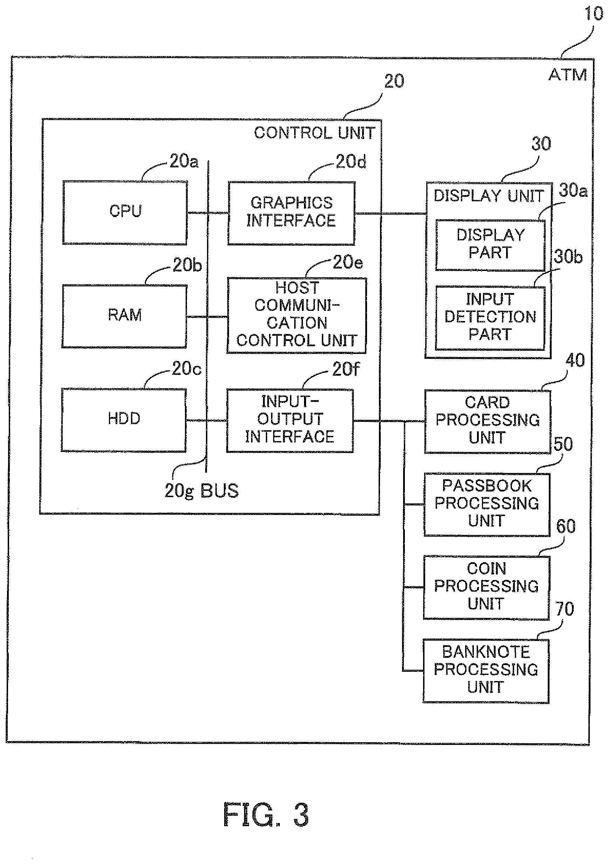

FIG. 3 illustrates an example hardware configuration of an ATM according to the second embodiment.

The ATM 10 includes a control unit 20 for performing predetermined processes of the ATM 10, and a display unit 30 for accepting users' operation inputs and displaying output results. The ATM 10 also includes a card processing unit 40 with the card slot 40a, a passbook processing unit 50 with the passbook slot 51, a coin processing unit 60 with the coin tray 60a, and a banknote processing unit 70 having the banknote slot 70a, as described with reference to FIG. 2.

The control unit 20 has a CPU 20a, a RAM (Random Access Memory) 20b, a HDD (Hard Disk Drive) 20c, a graphics interface 20d, a host communication control unit 20e, and an input-output interface 20f. These units are connected to each other via a bus 20g.

The CPU 20a executes programs stored in a storage medium such as the HDD 20c in order to control the entire operation of the ATM 10.

The RAM 20b temporarily stores part of OS (Operating System) programs to be executed by the CPU 20a, and also stores various data to be used while the CPU 20a runs.

The HDD 20c stores the OS and application programs that run on the ATM 10, and also stores data to be used while the CPU 20a runs.

The graphics interface 20d is connected to the display unit 30. The graphics interface 20d displays an image on the display part 30a of the display unit 30 according to an instruction from the CPU 20a. The graphics interface 20d acquires information according to an operation input detected by an input detection part 30b of the display unit 30.

The host communication control unit 20e is connected to a host computer (not illustrated) of a management center that manages ATMs 10 installed at various places, for example, via LAN (Local Area Network) so as to communicate signals with the host computer.

The input-output interface 20f is connected to the card processing unit 40, the passbook processing unit 50, the coin processing unit 60, and banknote processing unit 70. The input-output interface 20f is provided such that the card processing unit 40, passbook processing unit 50, coin processing unit 60, and banknote processing unit 70 are mutually connected to each other and communicate signals with the CPU 20a via the bus 20g.

The display unit 30 displays a transaction screen, and detects operation inputs made by a user. The display unit 30 includes the display part 30a and input detection part 30b.

The display part 30a displays a screen based on screen information according to a process of the ATM 10. For example, a LCD (Liquid Crystal Display) is used as the display part 30a.

The input detection part 30b detects a user touch to a screen displayed on the display part 30a. More specifically, the input detection part 30b detects the positional information of an operation input made by a user touch, from an infrared ray LED (Light Emitting Diode) whose infrared beam is blocked by the operation input and a photo transistor, and supplies the positional information to the control unit 20. The CPU 20a of the control unit 20 identifies the contents of a process corresponding to the detected touch position on the screen, and executes the process.

The card processing unit 40 records a result of a requested process performed in accordance with an execution instruction with respect to a user's card inserted into the card slot 40a. The card processing unit 40 ejects the card in which the recording of the processing result is complete, from the card slot 40a to return the card to the user.

The passbook processing unit 50 conveys a user's passbook inserted into the slot 51, to a predetermined position, and records the result of a requested process performed in accordance with an execution instruction from the user. The passbook processing unit 50 conveys and ejects the passbook in which the recording of the processing result is complete, from the slot 51 to return the passbook to the user.

The coin processing unit 60 and banknote processing unit 70 accept and count coins and banknotes inserted in the coin tray 60a and banknote slot 70a, respectively. In addition, in response to an execution instruction from the user, a requested number of coins and banknotes are dispensed from the coin tray 60a and banknote slot 70a.

The above-described card processing unit 40, passbook processing unit 50, coin processing unit 60, and banknote processing unit 70 are controlled by the CPU 20a of the control unit 20 in accordance with operation inputs made by the user on the display unit 30.

In addition to the above hardware configuration of FIG. 3, an operator, staff, bank staff, or others may manage various settings of the ATM 10, and a host device (not illustrated) such as an operation display unit for confirming the settings may be connected to the control unit 20.

The following describes the passbook processing unit 50 that is one of the hardware components of an ATM, in detail.

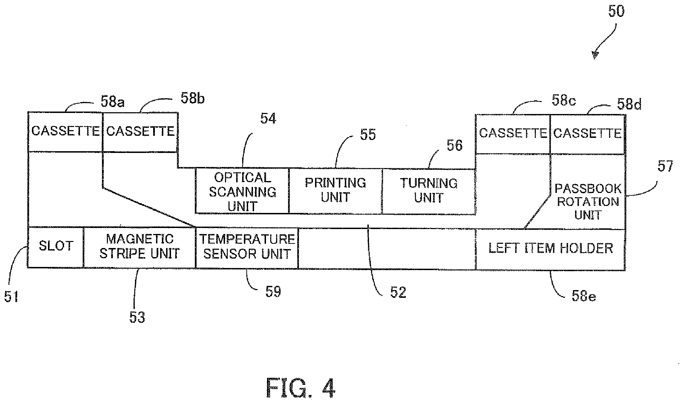

FIG. 4 illustrates an example configuration of a passbook processing unit provided in an ATM according to the second embodiment.

The passbook processing unit 50 includes a magnetic stripe unit 53, an optical scanning unit 54, a printing unit 55, a turning unit 56, a passbook rotation unit 57, cassettes 58a to 58d, a left item holder 58e, and a temperature sensor unit 59 on a conveyance path 52 leading to a slot 51.

The magnetic stripe unit 53 magnetically writes or reads transaction information on the magnetic stripe provided on an external surface of the front cover of a passbook.

The optical scanning unit 54 is an image scanner, for example, and captures the image data of a page of a passbook by performing the line-by-line scanning on the page in a vertical direction to the conveyance direction of the passbook from the top end to the bottom end of the passbook, and stores the image data in the RAM 20b. In this connection, the width of one scan of the optical scanning unit 54 is approximately 0.182 mm, for example.

The printing unit 55 prints transaction information such as date, transaction contents, withdrawal amount, or deposit amount, one line by one line on a page of the passbook.

The turning unit 56 turns a page of a passbook to the next page after the printing unit 55 prints a character string on the last line of the page, or turns the cover of the passbook to close the passbook.

The passbook rotation unit 57, for example, rotates a closed passbook, conveys the passbook on the conveyance path 52, and ejects the passbook from the slot 51.

The cassettes 58a to 58d hold new passbooks. A new passbook is taken out of the cassettes 58a to 58d when necessary.

The left item holder 58e takes a passbook in if a user left the passbook behind, and keeps the passbook therein.

The temperature sensor unit 59 detects an environmental temperature of the passbook processing unit 50.

The following describes a control function of the ATM 10.

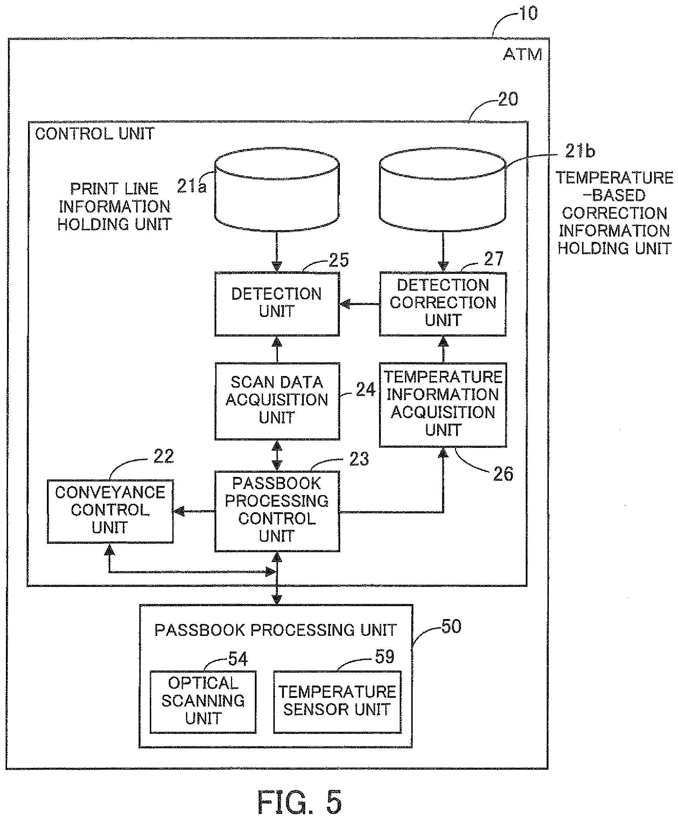

FIG. 5 is a block diagram illustrating functions of an ATM according to the second embodiment.

The ATM 10 is designed to capture the image data of a page of a passbook, and to change a detection area of the image data according to temperature for detecting target writing on the page.

The control unit 20 of this ATM 10 has a print line information holding unit 21a and a temperature-based correction information holding unit 21b, as illustrated in FIG. 5.

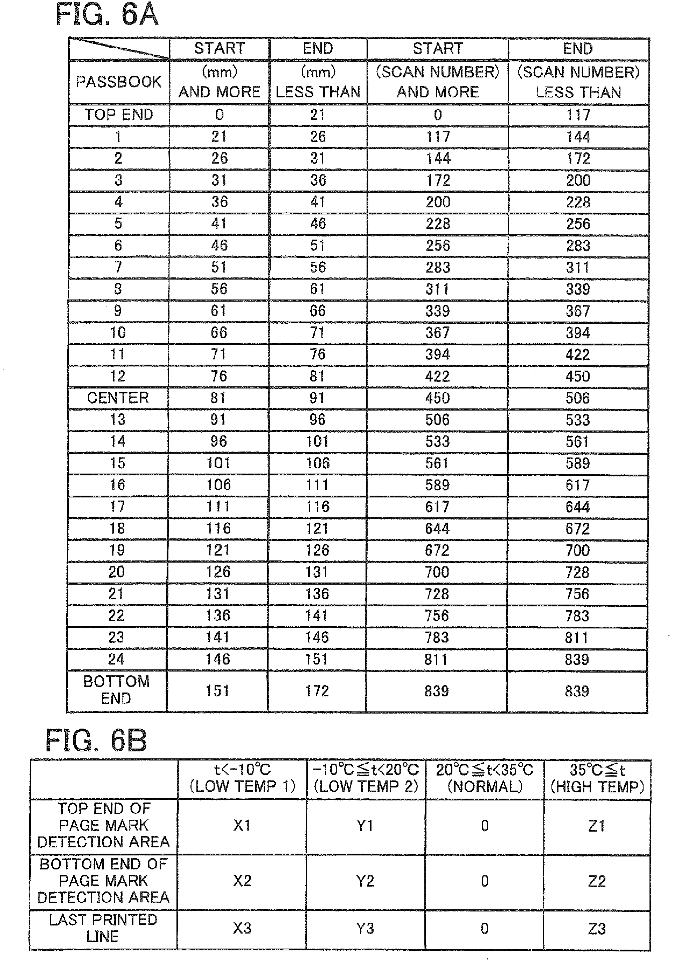

FIGS. 6A and 6B are diagrams for explaining print line information and temperature-based correction information set in an ATM according to the second embodiment.

FIG. 6A illustrate print line information held by the print line information holding unit 21a, and FIG. 6B illustrates temperature-based correction information held by the temperature-based correction information holding unit 21b. As to a scan number, one scan means that the optical scanning unit 54 performs scanning of one line once on a page of a passbook, and for example, when scanning of one line is performed 30 times, the last scan number is 30.

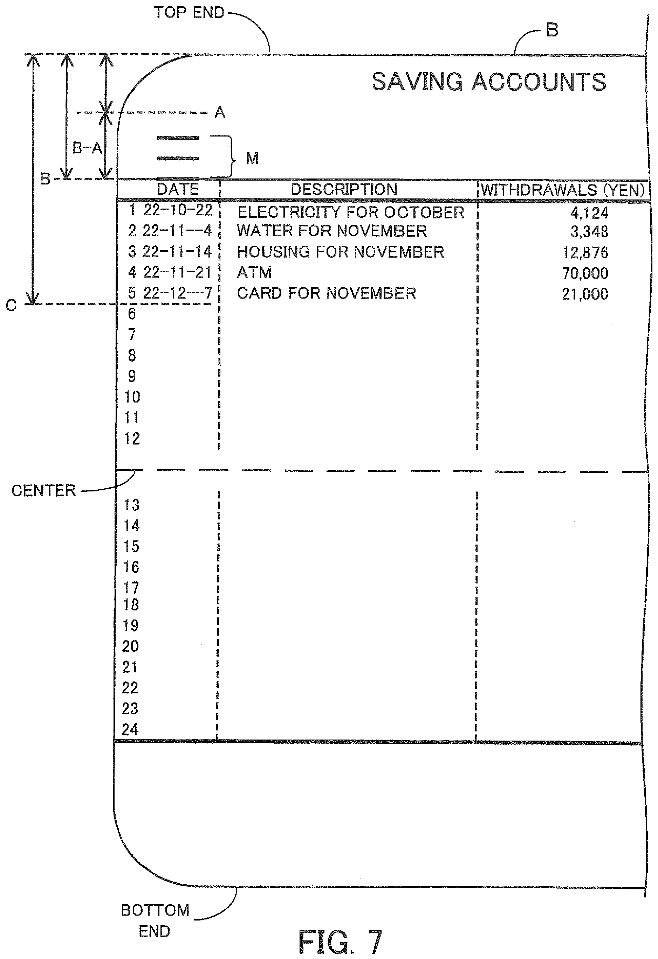

FIG. 7 illustrates an example of writing in a passbook.

FIG. 7 illustrates a passbook B in an open state, in which an upper side end of the passbook B is a top end, a lower side end is a bottom end, and seams indicated by a broken line in the middle indicate a center. In addition, a page mark M and the line numbers are written at the upper left part and left side of a page, respectively.

The print line information holding unit 21a previously holds information indicating a correspondence between a distance measured from the top end of a passbook and a scan number of scanning performed by the optical scanning unit 54.

Referring to FIG. 6A, scanning of 117th scan and more and less than 144th scan from the top end of a page, which is performed by the optical scanning unit 54, corresponds to an area of 21 mm and more and less than 26 mm measured from the top end of the page, and this area corresponds to the first line of the page.

As illustrated in FIG. 6B, the temperature-based correction information holding unit 21b holds information indicating correction values corresponding to scan numbers corresponding to predetermined positions measured from the top end of a page, with respect to four temperature ranges.

The following four temperature ranges are set. A temperature lower than -10 degrees is set as a low temperature (low temp) 1. A temperature equal to or higher than -10 degrees and lower than 20 degrees is set as a low temperature 2. A temperature equal to or higher than 20 degrees and lower than 35 degrees is set as a normal temperature. A temperature equal to or higher than 35 degrees is set as a high temperature (high temp).

With respect to such temperature ranges, a correction value is set for a scan number corresponding to the top end of a page mark detection area (A in FIG. 7), counted from the top end of the passbook B, for a scan number corresponding to the bottom end of the page mark detection area (B in FIG. 7), counted from the top end of the passbook, and for a scan number corresponding to the last printed line (C in FIG. 7), counted from the top end of a page.

It is found that, as a result of performing 1000 scans under the above four temperature ranges, an image enlarged by 6 scans is obtained under the low temperature 1, an image enlarged by 3 scans is obtained under the low temperature 2, and an image reduced by 3 scans is obtained under the high temperature.

Considering this result, the following correction values are calculated, using a coefficient of 0.006 for the low temperature 1, a coefficient of 0.003 for the low temperature 2, and a coefficient of -0.003 for the high temperature.

In this connection, an area of 7 mm and more and less than 20 mm measured from the top end of the page of FIG. 7 where the page mark M appears corresponds to scanning of 38th scan (=A) and more and less than 110th (=B) scan.

The correction values for the low temperature 1 (with the coefficient of 0.006) are calculated as follows:

$$X1 = 38\text{th scan} \times 0.006 = 0.228 \quad \ldots \quad (1)$$

$$X2 = 110\text{th scan} \times 0.006 = 0.66 \quad \ldots \quad (2)$$

The correction values for the low temperature 2 (with the coefficient of 0.003) are calculated as follows:

$$Y1 = 38\text{th scan} \times 0.003 = 0.114 \quad \ldots \quad (3)$$

$$Y2 = 110\text{th scan} \times 0.003 = 0.33 \quad \ldots \quad (4)$$

The correction values for the high temperature (with the coefficient of -0.003) are calculated as follows:

$$Z1 = 38\text{th scan} \times (-0.003) = -0.114 \quad \ldots \quad (5)$$

$$Z2 = 110\text{th scan} \times (-0.003) = -0.33 \quad \ldots \quad (6)$$

In addition, the correction values for the last printed line are represented as follows:

$$X3 = \text{scan number C corresponding to last printed line} \times 0.006 \quad ... (7)$$

$$Y3 = \text{scan number C corresponding to last printed line} \times 0.003 \quad ... (8)$$

$$Z3 = \text{scan number C corresponding to last printed line} \times (-0.003) \quad ... (9)$$

Referring back to FIG. 5 for explaining the configuration of the control unit 20 of the ATM 10, the control unit 20 further has a conveyance control unit 22, a passbook processing control unit 23, a scan data acquisition unit 24, a detection unit 25, a temperature information acquisition unit 26, and a detection correction unit 27.

The conveyance control unit 22 controls the conveyance of the passbook B to each unit of the passbook processing unit 50. The conveyance control unit 22 also controls the operation of the turning unit 56 and passbook rotation unit 57.

The passbook processing control unit 23 controls the entire operation of the passbook processing unit 50, and acquires information coming from the passbook processing unit 50.

The scan data acquisition unit 24 acquires image data captured by the optical scanning unit 54, from the passbook processing control unit 23, and supplies the data to the detection unit 25 to be described below.

The detection unit 25 detects image data of a detection position corresponding to a certain scan number counted from the top end of the page. In addition, the detection unit 25 detects image data of a detection area between predetermined scan numbers counted from the top end of the page. The detection unit 25 also specifies a line number corresponding to the detected image data with reference to the print line information holding unit 21a.

The temperature information acquisition unit 26 acquires temperature information detected by the temperature sensor unit 59, from the passbook processing control unit 23, and supplies the temperature information to the detection correction unit 27 to be described below.

The detection correction unit 27 determines a correction value corresponding to the received temperature information with reference to the temperature-based correction information holding unit 21b, and supplies the obtained correction value to the detection unit 25.

The following describes a printing process performed by the ATM 10.

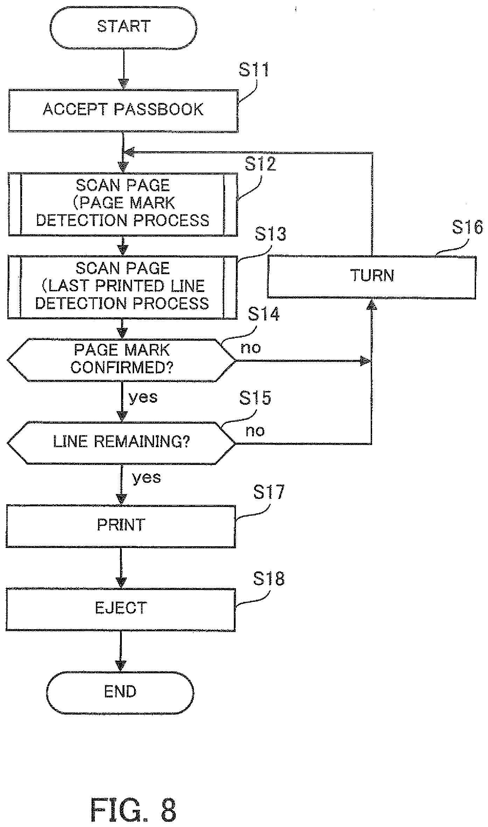

FIG. 8 is a flowchart of how an ATM performs a printing process on a passbook according to the second embodiment.

At step S11, a user inserts a passbook in an open state into the slot 51 of the passbook processing unit 50. The passbook processing unit 50 notifies the passbook processing control unit 23 of the control unit 20 of the acceptance of the passbook, and conveys the passbook to a position where the optical scanning unit 54 is placed.

At step S12, the optical scanning unit 54 captures the image data of the page of the passbook by scanning the page, and supplies the image data to the control unit 20. The control unit 20 detects a page mark from the received image data.

At step S13, the control unit 20 detects the last printed line of the page from the image data received at step S12.

Steps S12 and S13 may be executed in a reverse order.

At step S14, the passbook processing control unit 23 determines whether the page mark detected at step S12 is correctly confirmed or not.

If the page mark is correctly confirmed, the process goes on to step S15. Otherwise, the process goes on to step S16.

At step S15, the detection unit 25 specifies the line number of the last printed line on the basis of the scan number corresponding to the last printed line of the page detected at step S13, with reference to the print line information holding unit 21a. The detection unit 25 determines whether there is any remaining line by comparing the specified line number with the number of lines of the page.

If there is any remaining line, the process goes on to step S17. Otherwise, the process goes on to step S16.

At step S16, the passbook processing control unit 23 outputs a passbook turning request to the conveyance control unit 22. The conveyance control unit 22 causes the passbook processing unit 50 to turn the page of the passbook in response to the turning request.

At step S17, the passbook processing control unit 23 issues a printing request for printing transaction contents on the passbook, to the printing unit 55 of the passbook processing unit 50.

The printing unit 55 prints the transaction contents on the passbook, and after the printing is complete, sends a completion notice to the passbook processing control unit 23.

At step S18, the passbook processing control unit 23 issues a request for closing and ejecting the passbook from the slot 51, to the conveyance control unit 22.

The conveyance control unit 22 conveys the passbook to the turning unit 56 which closes and conveys the passbook to the passbook rotation unit 57. The passbook rotation unit 57 rotates the passbook so that the seams of the passbook face the slot 51. Then, the passbook is conveyed to and ejected from the slot 51.

The following describes steps S12 and S13 in detail.

First, a page mark detection process (step S12) will be described.

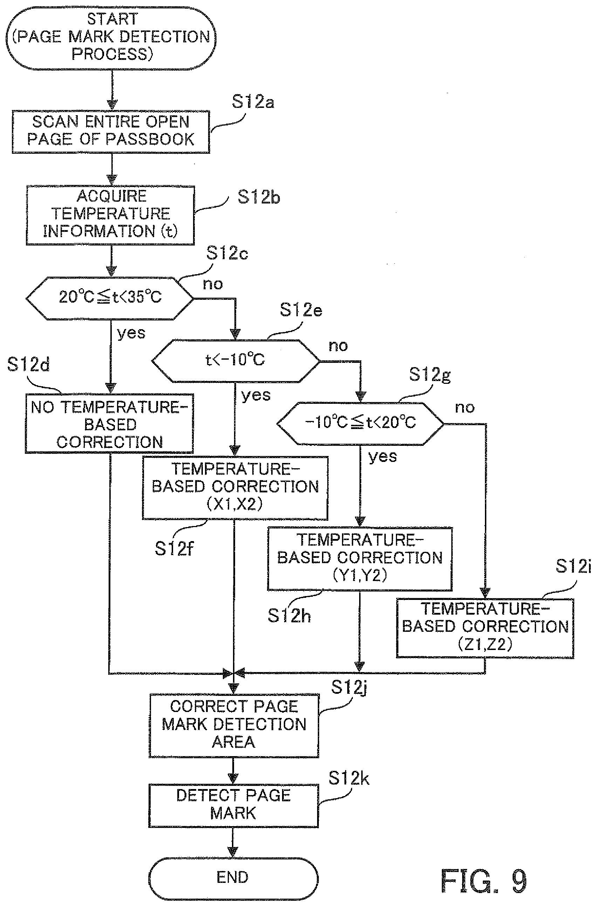

FIG. 9 is a flowchart of how to detect a page mark of a passbook according to the second embodiment.

At step S12a, the passbook in an open state is inserted in the passbook processing unit 50, and is conveyed to a predetermined optical scanning position. The passbook processing control unit 23 issues a passbook scanning request to the passbook processing unit 50.

The optical scanning unit 54 of the passbook processing unit 50 captures the image data of an entire page of the passbook, which is positioned at the optical scanning position and is conveyed by a predetermined conveyance amount, by performing the line-by-line scanning on the page, and supplies the image data to the passbook processing control unit 23.

The scan data acquisition unit 24 acquires the image data of the page from the passbook processing control unit 23.

At step S12b, the passbook processing control unit 23 acquires the information of a temperature (t) detected by the temperature sensor unit 59, from the passbook processing unit 50.

The temperature information acquisition unit 26 acquires the temperature information from the passbook processing control unit 23, and supplies the acquired temperature information to the detection correction unit 27.

At step S12c, the detection correction unit 27 determines whether the temperature acquired at step S12b is equal to or higher than 20 degrees and lower than 35 degrees.

If the temperature is equal to or higher than 20 degrees and lower than 35 degrees, the process goes on to step S12d. Otherwise, the process goes on to step S12e.

At step S12d, the detection correction unit 27 determines that a correction value corresponding to the temperature is 0 (no temperature-based correction), with reference to the temperature-based correction information holding unit 21b.

At step S12e, the detection correction unit 27 determines whether the temperature acquired at step S12b is lower than -10 degrees or not.

If the temperature is lower than -10 degrees, the process goes on to step S12f. Otherwise, the process goes on to step S12g.

At step S12f, the detection correction unit 27 determines that correction values corresponding to the temperature are X1 and X2, with reference to the temperature-based correction information holding unit 21b.

At step S12g, the detection correction unit 27 determines whether the temperature acquired at step S12b is equal to or higher than -10 degrees and lower than 20 degrees.

If the temperature is equal to or higher than -10 degrees and lower than 20 degrees, the process goes on to step S12h. Otherwise, the process goes on to step S12i.

At step S12h, the detection correction unit 27 determines that correction values corresponding to the temperature are Y1 and Y2, with reference to the temperature-based correction information holding unit 21b.

At step S12i, the detection correction unit 27 determines that correction values corresponding to the temperature are Z1 and Z2, with reference to the temperature-based correction information holding unit 21b.

At step S12j, the detection unit 25 corrects the detection area for detecting a page mark in the image data of the page received from the scan data acquisition unit 24, on the basis of the correction value(s) determined at step S12d, S12f, S12h, S12i.

At step S12k, the detection unit 25 detects the image data of the page mark appearing in the corrected detection area from the image data of the page received from the scan data acquisition unit 24.

The following describes a last printed line detection process (step S13).

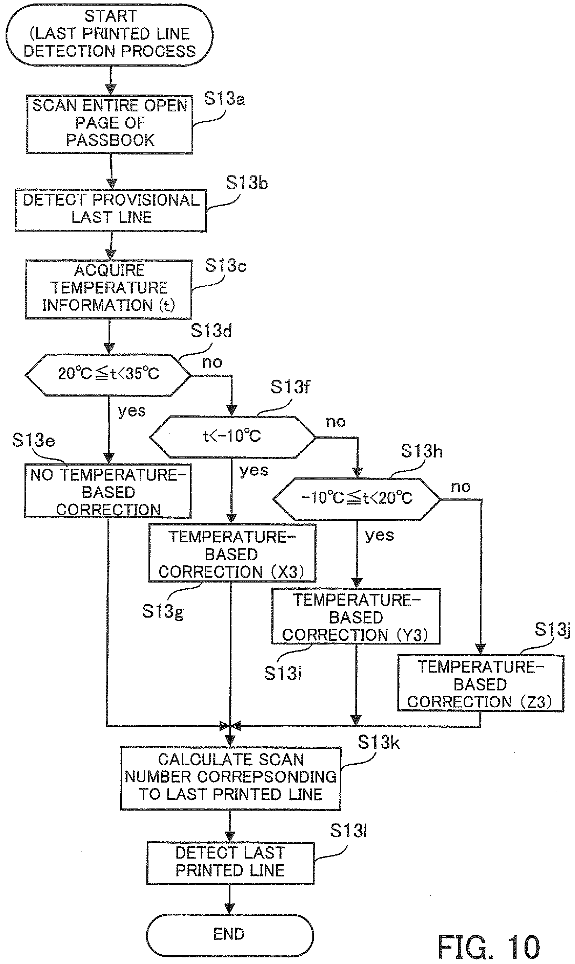

FIG. 10 is a flowchart of how to detect the last printed line of a passbook according to the second embodiment.

At step S13a, a passbook in an open state is inserted in the passbook processing unit 50, and is conveyed to a predetermined optical scanning position. The passbook processing control unit 23 issues a passbook scanning request to the passbook processing unit 50.

The optical scanning unit 54 of the passbook processing unit 50 captures the image data of the entire page of the passbook, which is positioned at the optical scanning position and is conveyed by a predetermined conveyance amount, by performing the line-by-line scanning on the page, and supplies the image data to the passbook processing control unit 23.

The scan data acquisition unit 24 acquires the image data of the page from the passbook processing control unit 23.

At step S13b, the scan data acquisition unit 24 acquires the image data from the passbook processing control unit 23, and supplies the image data to the detection unit 25.

The detection unit 25 detects the character string of the last printed line (provisional last printed line) of the page from the received image data, and the scan number (provisional scan number) corresponding to the character string of the last printed line (without taking temperature into consideration).

At step S13c, the passbook processing control unit 23 acquires the information on a temperature (t) detected by the temperature sensor unit 59, from the passbook processing unit 50.

The temperature information acquisition unit 26 acquires the temperature information from the passbook processing control unit 23, and supplies the acquired temperature information to the detection correction unit 27.

At step S13d, the detection correction unit 27 determines whether the temperature acquired at step S13c is equal to or higher than 20 degrees and lower than 35 degrees.

If the temperature is equal to or higher than 20 degrees and lower than 35 degrees, the process goes on to step S13e. Otherwise, the process goes on to step S13f.

At step S13e, the detection correction unit 27 determines that a correction value corresponding to the temperature is zero (no temperature-based correction), with reference to the temperature-based correction information holding unit 21b.

At step S13f, the detection correction unit 27 determines whether the temperature acquired at step S13c is lower than -10 degrees or not.

If the temperature is lower than -10 degrees, the process goes on to step S13g. Otherwise, the process goes on to step S13h.

At step S13g, the detection correction unit 27 calculates a correction value of X3 by the equation (7) using the provisional scan number obtained at step S13b, with reference to the temperature-based correction information holding unit 21b.

At step S13h, the detection correction unit 27 determines whether the temperature acquired at step S13c is equal to or higher than -10 degrees and lower than 20 degrees.

If the temperature is equal to or higher than -10 degrees and lower than 20 degrees, the process goes on to step S13i. Otherwise, the process goes on to step S13j.

At step S13i, the detection correction unit 27 calculates a correction value of Y3 by the equation (8) using the provisional scan number obtained at step S13b with reference to the temperature-based correction information holding unit 21b.

At step S13j, the detection correction unit 27 calculates a correction value of Z3 by the equation (9) using the provisional scan number obtained at step S13b, with reference to the temperature-based correction information holding unit 21b.

At step S13k, the detection unit 25 calculates the scan number corresponding to the character string of the last printed line corrected by the following equation using the provisional scan number obtained at step S13b and the correction value determined at steps S13e, S13g, S13i, and S13j.

Scan number corresponding to character string of last printed line = provisional scan number (step S13b) + ((provisional scan number/100) $\times$ correction value (step S13e, S13g, S13i, S13j)) ... (10)

At step S13l, the detection unit 25 detects the character string of the last printed line on the basis of the scan number calculated at step S13k.

With the above process, the page mark and the character string of the last printed line can be detected.

The following describes a concrete example of the processes of FIGS. 8 to 10 performed by the ATM 10.

In this example, assume that the temperature sensor unit 59 detects a temperature of 18 degrees.

First, a user inserts a passbook in an open state into the slot 51 of the passbook processing unit 50. The passbook processing unit 50 notifies the passbook processing control unit 23 of the control unit 20 of the acceptance of the passbook, and also carries the passbook to the position where the optical scanning unit 54 is placed (step S11).

The optical scanning unit 54 of the passbook processing unit 50 captures the image data of the entire page of the passbook, which is positioned at the optical scanning position and is conveyed by a predetermined conveyance amount, by performing the line-by-line scanning on the page, and supplies the image data to the passbook processing control unit 23 (step S12a).

The passbook processing control unit 23 acquires information on a temperature (t= 18 degrees) detected by the temperature sensor unit 59, from the passbook processing unit 50 (steps S12b, S12c, S12e, and S12g).

In this case, the detection correction unit 27 determines with reference to the temperature-based correction information holding unit 21b that the correction values corresponding to the temperature are Y1 = 0.114 and Y2 = 0.33 from the equations (3) and (4) (step S12h).

The detection unit 25 corrects a detection area between the A = 38th scan and B = 110th scan to a detection area between A = 38.114 (= 38 + 0.114)th scan and B = 110.33 (= 110 + 0.33)rd scan on the basis of the correction values in the image data of the page received from the scan data acquisition unit 24 (step S12j).

Then, the detection unit 25 detects the image data of the page mark within the corrected detection area (step S12k) .

Further, the detection unit 25 detects the provisional last printed line of the page and the provisional scan number corresponding to the provisional last printed line (for example, 350th scan), from the received image data of the page (without taking temperature into consideration) (steps S13a and S13b).

Because the temperature is 18 degrees, the detection correction unit 27 determines with reference to the temperature-based correction information holding unit 21b that the correction value corresponding to the temperature is 1.05 (= 350 $\times$ 0.003) (steps S13c, S13d, S13f, S13h, and S13i) from the equation (8).

The detection unit 25 calculates the scan number corresponding to the character string of the last printed line to be 353.675 (=350 (provisional scan number) + (350 / 100 $\times$ 1.05)), and detects the character string of the last printed line corresponding to this calculated scan number in the image data (steps S13k and S13l).

As described above, the detection unit 25 is capable of confirming the page mark correctly. The detection unit 25 also determines with reference to the print line information holding unit 21a that the detected last printed line is the 9th line on the basis of the scan number corresponding to the last printed line, and determines that there are remaining lines below the 9th line (steps S14 and S15).

Then, the passbook processing control unit 23 causes the printing unit 55 of the passbook processing unit 50 to print transaction contents below the character string of the last printed line detected at step S13k, and after the printing is complete, the passbook is ejected outside (steps S17 and S18).

As described above, with respect to the image data of a page of the passbook B captured by sequentially scanning the page, the ATM 10 changes the detection area for detecting a page mark and the detection position for detecting the last printed line according to temperature.

As a result, the page mark and last printed line can correctly be detected even in the case where the image data of a page of the passbook B varies in size due to a change in a conveyance amount according to temperature.

In the following it is described how to detect a page mark and last printed line from the image data of a page of a passbook correctly, without detecting a temperature and regardless thereof, as third example.

An ATM according to the third example has the hard configuration of FIG. 3, and has the following control functions.

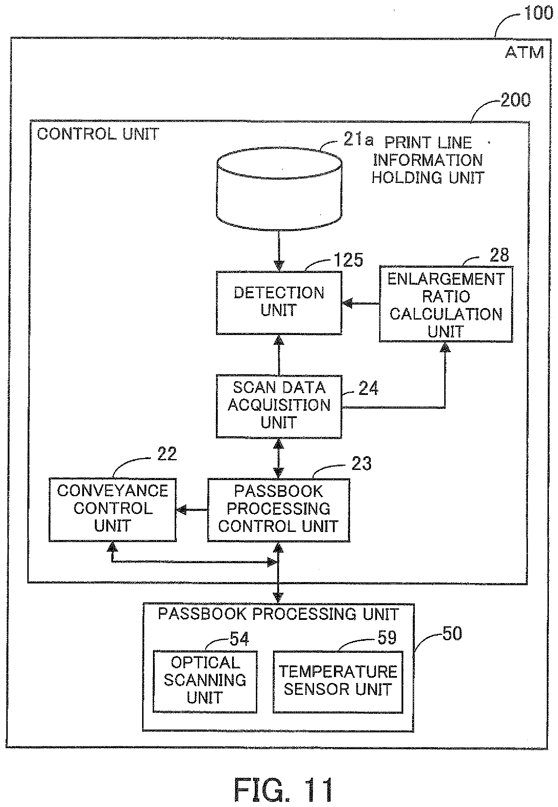

FIG. 11 is a block diagram illustrating functions of an ATM according to the third example.

In FIG. 11, the same reference numerals are applied to units corresponding to those of FIG. 5, and the explanation thereof will not be repeated.

The ATM 100 is designed to capture the image data of a page of a passbook, and to change a detection area and detection position of the image data of the page according to an enlargement ratio of the captured image data to the normal image data whose size is not influenced by temperature.

A control unit 200 of this ATM 100 includes a print line information holding unit 21a, a conveyance control unit 22, a passbook processing control unit 23, a scan data acquisition unit 24, an enlargement ratio calculation unit 28, and a detection unit 125.

The enlargement ratio calculation unit 28 acquires the image data of a page of a passbook B captured by the optical scanning unit 54, from the scan data acquisition unit 24, and calculates a length enlargement ratio in the conveyance direction of the acquired image data to the normal image data whose size is not influenced by temperature.

The following describes enlargement examples of the image data of a page of a passbook.

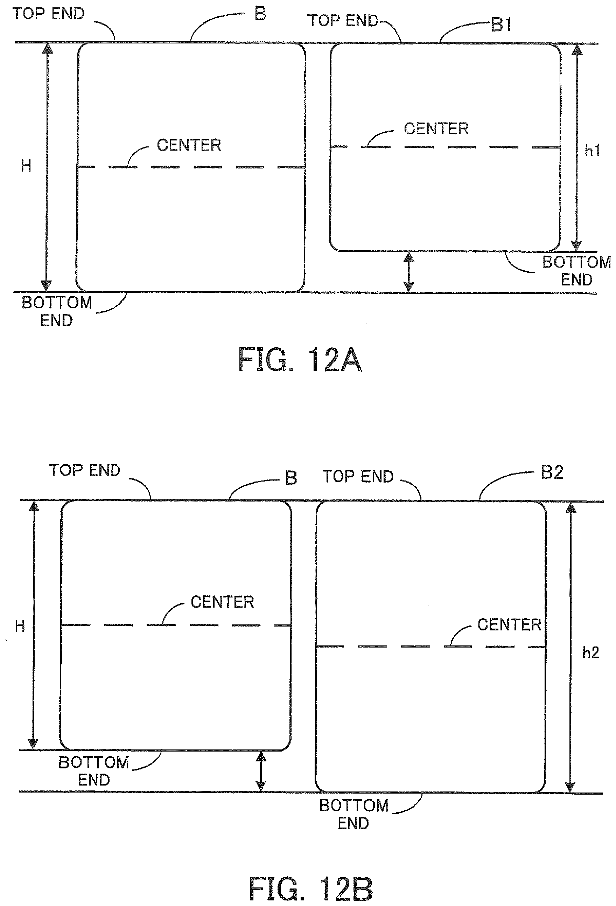

FIGS. 12A and 12B illustrate examples of enlargement of a passbook.

FIGS. 12A and 12B illustrate a normally captured image of a page of a passbook B on the left side thereof. The passbook has a length of H in a conveyance direction. FIG. 12A illustrates a reduced image of a page of a passbook. FIG. 12B illustrates an enlarged image of a page of a passbook.

As described earlier, a conveyance roller of the passbook processing unit 50 expands or shrinks according to environmental temperature, which causes a change in the conveyance amount of the passbook B.

Under high temperature, the conveyance amount of the passbook B increases because the conveyance roller expands. If the optical scanning unit 54 scans the page of the passbook B which is conveyed faster than usual, the image data of the scanned page has a length of h1 that is smaller than the length H of the normal image data of the page, as illustrated on the right side of FIG. 12A.

In this case, the enlargement ratio calculated by the enlargement ratio calculation unit 28 is h1/H (<1).

Under low temperature, contrary to the high temperature, the optical scanning unit 54 scans the page of the passbook B which is conveyed slower than usual, so that the image data of the scanned page has a length of h2 that is greater than the length H of the normal image data of the page, as illustrated on the right side of FIG. 12B.

In this case, the enlargement ratio calculated by the enlargement ratio calculation unit 28 is h2/H (>1).

The passbook B in an open state has about a length of 174.6 mm in the conveyance direction. Since one scan has a width of 0.182 mm, this normal length H needs 959 scans.

In addition, the detection unit 125 detects the image data of the detection position corresponding to a certain scan number counted from the top end of the page (similarly to the above-described detection unit 25). The detection unit 125 also detects the image data of the detection area between predetermined scan numbers counted from the top end of the page. In addition, the detection unit 125 specifies a line number corresponding to the detected image data with reference to the print line information holding unit 21a. The detection unit 125 further changes the detection position and detection area according to an enlargement ratio calculated by the enlargement ratio calculation unit 28.

The ATM 100 configured as above performs a printing process in accordance with a similar processing flow to FIG. 8.

With respect to steps S12 and S13 of FIG. 8, the ATM 100 performs the following process.

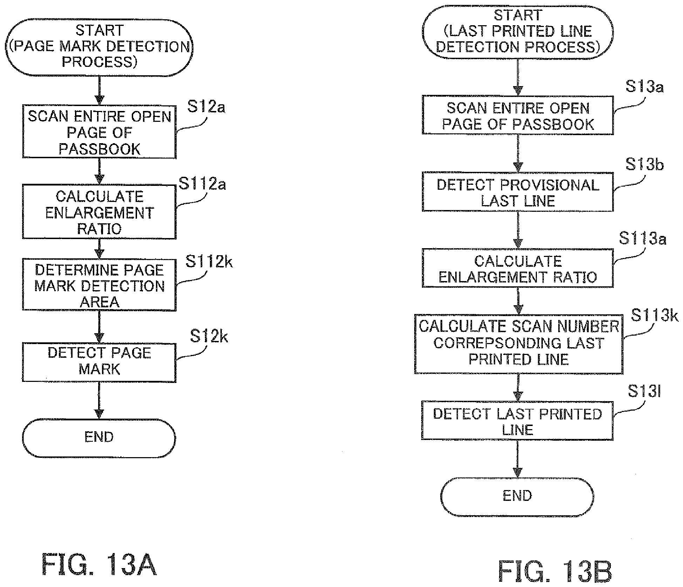

FIGS. 13A and 13B are flowcharts of how to detect a page mark and last printed line of a passbook according to the third example.

In this connection, FIG. 13A illustrates a page mark detection process that is executed at step S12, and FIG. 13B illustrates a last printed line detection process that is executed at step S13.

The same numbers are applied to the same steps as those of FIGS. 9 and 10, and the explanation of these will not be repeated.

First, the page mark detection process will be described.

At step S112a, the enlargement ratio calculation unit 28 acquires the image data of a page from the scan data acquisition unit 24. The enlargement ratio calculation unit 28 calculates a length enlargement ratio in the conveyance direction of the acquired image data to the normal image data of the page.

At step S112k, the detection unit 125 acquires the enlargement ratio from the enlargement ratio calculation unit 28, and corrects the detection area for detecting a page mark in the image data of the page on the basis of the enlargement ratio.

Now, the last printed line detection process will be described.

At step S113a, the enlargement ratio calculation unit 28 acquires the image data of a page from the scan data acquisition unit 24, and then calculates a length enlargement ratio in the conveyance direction of the acquired image data to the normal image data of the page.

At step S113k, the detection unit 125 calculates the scan number corresponding to the character string of the last printed line corrected by the following equation using the provisional scan number obtained at step S13b and the enlargement ratio.

```
Scan  number  corresponding  to  character  string  of last printed line = provisional scan number (step S13b) +

(provisional  scan  number  ×  enlargement  ratio  (step

S113a)) ... (11)
```

The following describes a specific example of the processes of FIGS. 13A and 13B that are performed by the ATM 100. Now, the explanation of step S11 and S14 to S18 of FIG. 8 will not be repeated.

The optical scanning unit 54 of the passbook processing unit 50 acquires the image data of an entire page of a passbook, which is positioned at an optical scanning position and is conveyed by a predetermined conveyance amount, by performing the line-by-line scanning on the page, and then supplies the image data to the passbook processing control unit 23 (step S12a).

The enlargement ratio calculation unit 28 calculates a length enlargement ratio ($1.04 \approx 995/959$) in the conveyance direction of the acquired image data (for example, 995 scans) to the normal image data (959 scans) of a page (step S112a).

The detection unit 125 acquires the enlargement ratio (1.04) from the enlargement ratio calculation unit 28. In this case, the detection unit 125 corrects the detection area (A=38 to B=110) for detecting a page mark in the image data of the page to A=39.52 (=38 × 1.04) to B=114.4 (=110 × 1.04) on the basis of the enlargement ratio (step S112k).

The detection unit 125 detects the image data of a page mark within the corrected detection area of the image data of the page (step S12k).

In addition, the detection unit 125 detects the provisional last printed line of the page and the provisional scan number corresponding to the provisional last printed line (for example, 350th scan) from the received image data of the page (without taking temperature into consideration) (steps S13a and S13b).

Similarly to the detection of a page mark, the enlargement ratio calculation unit 28 calculates a length enlargement ratio (1.04 ≈ 995/959) in the conveyance direction of the captured image data (for example, 995 scans) to the normal image data of a page (959 scans) (step S113a).

The detection unit 125 calculates 364 (=350 × 1.04) as the scan number corresponding to the character string of the last printed line, and detects the character string of the last printed line on the basis of the scan number (steps S113k and S13l).

As described above, the ATM 100 changes a detection area for detecting a page mark and a detection position for detecting the last printed line in the image data of a page of a passbook B captured by sequentially scanning the page, on the basis of a length enlargement ratio of the scanned page to the normal page.

Therefore, it becomes possible to correctly detect a page mark and last printed line even in the case where the image data of a page of a passbook B varies in size due to a change in a conveyance amount according to temperature.

The above processing functions can be realized by a computer. In this case, a program is prepared, which describes the processing contents of the functions of the automated transaction apparatus 1 or ATM 10, 100. The above processing functions are realized on the computer by executing the program. The program describing the needed processes may be recorded on a computer-readable recording medium. Computer-readable recording media include magnetic recording devices, optical discs, magneto-optical recording media, semiconductor memories, etc. The magnetic recording devices include Hard Disk Drives (HDD), Flexible Disks (FD), media, etc. The optical discs include Digital DVDs (Digital Versatile Disc), DVD-RAMs, CD (Compact Disc)-ROM/RWs (Rewritable), etc. The magneto-optical recording media include MOs (Magneto-Optical disk), etc.

To distribute the program, portable recording media, such as DVDs and CD-ROMs, on which the program is recorded may be put on sale. Alternatively, the program may be stored in the storage device of a server computer and may be transferred from the server computer to other computers through a network.

A computer which is to execute the above program stores in its local storage device the program recorded on a portable recording medium or transferred from the server computer, for example. Then, the computer reads the program from the local storage device, and runs the program. The computer may run the program directly from the portable recording medium. Also, while receiving the program being transferred from the server computer, the computer may sequentially run this program.

Further, at least part of the above processing functions may be realized by electronic circuits such as DSP (Digital Signal Processor), ASIC (Application Specific Integrated Circuit), and PLD (Programmable Logic Device).

The above-described automated transaction apparatus and booklet medium scanning method of the automated transaction apparatus make it possible to detect a page of a booklet medium, regardless of temperature.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that various changes, substitutions, and alterations could be made hereto without departing from the scope of the invention.

**Claims**

1. An automated transaction apparatus which handles a booklet medium, the apparatus comprising:

   a scanning means (54) configured to capture image data of a page of the booklet medium by sequentially scanning the page corresponding to scan numbers counted from one end of the page of the booklet medium;
   a print line information holding means (2b) configured to hold information on line numbers of a page corresponding to the scan numbers of scanning performed on the page;
   **characterized by**
   a temperature sensor means (3b) configured to detect a temperature;
   a temperature-based correction information holding means (2a) configured to hold information on correction values that are set for scan numbers counted from the one end of the page to be scanned according to temperature;
   a detection means (2d) configured to detect image data corresponding to a scan number counted from one end of the page;
   a detection correction means (2e) configured to change the scan number of the image data detected by the detection means (2d), counted from the one end, according to the temperature detected by the temperature sensor means (3b) with reference to the temperature-based correction information holding means (2a).

2. The automated transaction apparatus according to claim 1, wherein:

the detection means (2d) detects image data between a first scan number counted from the one end of the page and a second scan number counted from the one end; and
the detection correction means (2e) changes the first scan number and the second scan number according to the temperature detected by the temperature sensor means (3b) .

3. The automated transaction apparatus according to claim 1, wherein:

a character string is written one line by one line on the page of the booklet medium; and
a character string of a last printed line of the page corresponds to the scan number changed by the detection correction means (2e) according to the temperature detected by the temperature sensor means (3b).

4. The automated transaction apparatus according to claim 2, wherein:

a page mark representing a page number is written on each page of the booklet medium prior to scanning; and
the page mark appears in the image data between the first scan number and the second scan number changed by the detection correction means (2e) according to the temperature detected by the temperature sensor means (3b) .

5. A booklet medium scanning method of an automated transaction apparatus which handles a booklet medium, the method comprising:

capturing image data of a page of the booklet medium by sequentially scanning the page corresponding to scan numbers counted from one end of the page of the booklet medium;
holding information on line numbers of a page corresponding to the scan numbers of scanning performed on the page;
***characterized by***
detecting a temperature; and
holding information on correction values that are set for scan numbers counted from the one end of the page to be scanned according to temperature; and
detecting image data corresponding to a scan number counted from one end of the page;
changing the scan number of the image data detected by the detection means (2d), counted from the one end, according to the detected temperature with reference to the temperature-based correction information.

**Patentansprüche**

1. Automatische Transaktionsvorrichtung, die ein Broschürenmedium handhabt, wobei die Vorrichtung umfasst:

eine Abtasteinrichtung (54), die so konfiguriert ist, dass sie Bilddaten einer Seite des Broschürenmediums erfasst, indem sie sequenziell die Seite abtastet, die Abtastzahlen bei Zählung von einem Ende der Seite des Broschürenmediums entspricht;
eine Druckzeile-Informationen-Halteeinrichtung (2b), die so konfiguriert ist, dass sie Informationen über Zeilennummern einer Seite hält, die den Abtastzahlen einer Abtastung entsprechen, die an der Seite durchgeführt wird;
**gekennzeichnet durch**
eine Temperatursensoreinrichtung (3b), die so konfiguriert ist, dass sie eine Temperatur detektiert;
eine temperaturbasierte Korrekturinformationen-Halteeinrichtung (2a), die so konfiguriert ist, dass sie Informationen über Korrekturwerte, die für Abtastzahlen bei Zählung von dem einen Ende der abzutastenden Seite eingestellt sind, gemäß einer Temperatur hält;
eine Detektionseinrichtung (2d), die so konfiguriert ist, dass sie Bilddaten detektiert, die einer Abtastzahl bei Zählung von einem Ende der Seite entsprechen;
eine Detektions-Korrektureinrichtung (2e), die so konfiguriert ist, dass sie die Abtastzahl der Bilddaten, die von der Detektionseinrichtung (2d) detektiert werden, bei Zählung von dem einen Ende gemäß der Temperatur, die von der Temperatursensoreinrichtung (3b) detektiert wird, unter Bezugnahme auf die temperaturbasierte Korrekturinformationen-Halteeinrichtung (2a) verändert.

2. Automatische Transaktionsvorrichtung nach Anspruch 1, wobei:

die Detektionseinrichtung (2d) Bilddaten zwischen einer ersten Abtastzahl bei Zählung von dem einen Ende der Seite und einer zweiten Abtastzahl bei Zählung von dem anderen Ende detektiert; und die Detektions-Korrektureinrichtung (2e) die erste Abtastzahl und die zweite Abtastzahl gemäß der mittels der Temperatursensoreinrichtung (3b) detektierten Temperatur verändert.

3. Automatische Transaktionsvorrichtung nach Anspruch 1, wobei:

eine Zeichenkette eine Zeile für Zeile auf der Seite des Broschürenmediums geschrieben ist; und eine Zeichenkette einer zuletzt gedruckten Zeile der Seite der Abtastzahl entspricht, die von der Detektions-Korrektureinrichtung (2e) gemäß der mittels der Temperatursensoreinrichtung (3b) detektierten Temperatur verändert wird.

4. Automatische Transaktionsvorrichtung nach Anspruch 2, wobei:

eine Seitenmarke, die eine Seitenzahl darstellt, auf jede Seite des Broschürenmediums vor dem Scannen geschrieben ist; und die Seitenmarke in den Bilddaten zwischen der ersten Abtastzahl und der zweiten Abtastzahl erscheint, die von der Detektions-Korrektureinrichtung (2e) gemäß der mittels der Temperatursensoreinrichtung (3b) detektierten Temperatur verändert wird.

5. Broschürenmedium-Abtastverfahren einer automatischen Transaktionsvorrichtung, die ein Broschürenmedium handhabt, wobei das Verfahren umfasst:

Erfassen von Bilddaten einer Seite des Broschürenmediums, indem die Seite sequenziell abgetastet wird, die Abtastzahlen bei Zählung von einem Ende der Seite des Broschürenmediums entspricht; Halten von Informationen über Zeilennummern einer Seite, die den Abtastzahlen einer Abtastung entsprechen, die an der Seite durchgeführt wird; **gekennzeichnet durch** Detektieren einer Temperatur; und Halten von Informationen über Korrekturwerte, die für Abtastzahlen bei Zählung von dem einen Ende der abzutastenden Seite eingestellt sind, gemäß einer Temperatur; und Detektieren von Bilddaten, die einer Abtastzahl bei Zählung von einem Ende der Seite entsprechen; Verändern der Abtastzahl der Bilddaten, die von der Detektionseinrichtung (2d) detektiert werden, bei Zählung von dem einen Ende gemäß der detektierten Temperatur unter Bezugnahme auf die temperaturbasierten Korrekturinformationen.

**Revendications**

1. Appareil de transaction automatisé qui manipule un support de livret, l'appareil comprenant :

un moyen de numérisation (54) configuré pour capturer des données d'image d'une page du support de livret en numérisant successivement la page correspondant aux numéros de numérisation comptés à partir d'une fin de la page du support de livret ; un moyen de retenue d'information de ligne d'impression (2b) configuré pour retenir de l'information sur des numéros de ligne d'une page correspondant aux numéros de numérisation d'une numérisation réalisée sur la page ; **caractérisé par** un moyen de capteur de température (3b) configuré pour détecter une température ; un moyen de retenue d'information de correction basée sur la température (2a) configuré pour retenir de l'information sur des valeurs de correction qui sont fixées pour des numéros de numérisation comptés à partir de la une fin de la page à numériser selon la température ; un moyen de détection (2d) configuré pour détecter des données d'image correspondant à un numéro de numérisation compté à partir d'une fin de la page ;

un moyen de correction de détection (2e) configuré pour modifier le numéro de numérisation des données d'image détectées par le moyen de détection (2d), compté à partir de la une fin, selon la température détectée par le moyen de capteur de température (3b) avec une référence au moyen de retenue d'information de correction basée sur la température (2a).

2. Appareil de transaction automatisé selon la revendication 1, où :

le moyen de détection (2d) détecte des données d'image entre un premier numéro de numérisation compté à partir de la une fin de la page et un second numéro de numérisation compté à partir de l'autre fin ; et
le moyen de correction de détection (2e) modifie le premier numéro de numérisation et le second numéro de numérisation selon la température détectée par le moyen de capteur de température (3b).

3. Appareil de transaction automatisé selon la revendication 1, où :

une série de caractères est écrite ligne par ligne sur la page du support de livret ; et
une série de caractères d'une dernière ligne imprimée de la page correspond au numéro de numérisation modifié par le moyen de correction de détection (2e) selon la température détectée par le moyen de capteur de température (3b).

4. Appareil de transaction automatisé selon la revendication 2, où :

un marquage de page représentant un numéro de page est écrit sur chaque page du support de livret avant la numérisation ; et
le marquage de page apparaît dans les données d'image entre le premier numéro de numérisation et le second numéro de numérisation modifié par le moyen de correction de détection (2e) selon la température détectée par le moyen de capteur de température (3b).

5. Procédé de numérisation de support de livret d'un appareil de transaction automatisé qui manipule un support de livret, le procédé comprenant :

la capture de données d'image d'une page du support de livret en numérisant successivement la page correspondant aux numéros de numérisation comptés à partir d'une fin de la page du support de livret ;
la retenue d'information sur des numéros de ligne d'une page correspondant aux numéros de numérisation d'une numérisation réalisée sur la page ;
**caractérisé par**
la détection d'une température ; et
la retenue d'information sur des valeurs de correction qui sont fixées pour des numéros de numérisation comptés à partir de la une fin de la page à scanner selon la température ; et
la détection de données d'image correspondant à un numéro de numérisation compté à partir d'une fin de la page ;
la modification du numéro de numérisation des données d'image détectées par le moyen de détection (2d), compté à partir de la une fin, selon la température détectée avec une référence à l'information de correction basée sur la température.

AUTOMATED TRANSACTION APPARATUS

2

CONTROL UNIT

2b

PRINT LINE INFORMATION HOLDING MEANS

2a

TEMPERATURE-BASED CORRECTION INFORMATION HOLDING MEANS

2d

DETECTION MEANS

2e

DETECTION CORRECTION MEANS

2c

SCAN CONTROL UNIT

3

PASSBOOK PROCESSING UNIT

3a

SCANNING MEANS

3b

TEMPERATURE SENSOR MEANS

FIG. 1A

ONE END

B

A1
B1

A2
B2

M

FIG. 1B

FIG. 2

10
ATM

20
CONTROL UNIT

20a
CPU

20d
GRAPHICS INTERFACE

20b
RAM

20e
HOST COMMUNI-CATION CONTROL UNIT

20c
HDD

20f
INPUT-OUTPUT INTERFACE

20g BUS

30
DISPLAY UNIT

30a
DISPLAY PART

30b
INPUT DETECTION PART

40
CARD PROCESSING UNIT

50
PASSBOOK PROCESSING UNIT

60
COIN PROCESSING UNIT

70
BANKNOTE PROCESSING UNIT

FIG. 3

50

| 58a | 58b | | | | 58c | 58d | |
| CASSETTE | CASSETTE | | | | CASSETTE | CASSETTE | |

| | | OPTICAL SCANNING UNIT | PRINTING UNIT | TURNING UNIT | | PASSBOOK ROTATION UNIT | |

54 55 56 57

| SLOT | MAGNETIC STRIPE UNIT | TEMPERATURE SENSOR UNIT | | | LEFT ITEM HOLDER | |

51 53 59 52 58e

FIG. 4

**FIG. 5**

# FIG. 6A

| PASSBOOK | START (mm) AND MORE | END (mm) LESS THAN | START (SCAN NUMBER) AND MORE | END (SCAN NUMBER) LESS THAN |
|---|---|---|---|---|
| TOP END | 0 | 21 | 0 | 117 |
| 1 | 21 | 26 | 117 | 144 |
| 2 | 26 | 31 | 144 | 172 |
| 3 | 31 | 36 | 172 | 200 |
| 4 | 36 | 41 | 200 | 228 |
| 5 | 41 | 46 | 228 | 256 |
| 6 | 46 | 51 | 256 | 283 |
| 7 | 51 | 56 | 283 | 311 |
| 8 | 56 | 61 | 311 | 339 |
| 9 | 61 | 66 | 339 | 367 |
| 10 | 66 | 71 | 367 | 394 |
| 11 | 71 | 76 | 394 | 422 |
| 12 | 76 | 81 | 422 | 450 |
| CENTER | 81 | 91 | 450 | 506 |
| 13 | 91 | 96 | 506 | 533 |
| 14 | 96 | 101 | 533 | 561 |
| 15 | 101 | 106 | 561 | 589 |
| 16 | 106 | 111 | 589 | 617 |
| 17 | 111 | 116 | 617 | 644 |
| 18 | 116 | 121 | 644 | 672 |
| 19 | 121 | 126 | 672 | 700 |
| 20 | 126 | 131 | 700 | 728 |
| 21 | 131 | 136 | 728 | 756 |
| 22 | 136 | 141 | 756 | 783 |
| 23 | 141 | 146 | 783 | 811 |
| 24 | 146 | 151 | 811 | 839 |
| BOTTOM END | 151 | 172 | 839 | 839 |

# FIG. 6B

| | $t < -10°C$ (LOW TEMP 1) | $-10°C \leqq t < 20°C$ (LOW TEMP 2) | $20°C \leqq t < 35°C$ (NORMAL) | $35°C \leqq t$ (HIGH TEMP) |
|---|---|---|---|---|
| TOP END OF PAGE MARK DETECTION AREA | X1 | Y1 | 0 | Z1 |
| BOTTOM END OF PAGE MARK DETECTION AREA | X2 | Y2 | 0 | Z2 |
| LAST PRINTED LINE | X3 | Y3 | 0 | Z3 |

TOP END

B

SAVING ACCOUNTS

A

B-A

M

B

C

CENTER

| | DATE | DESCRIPTION | WITHDRAWALS (YEN) |
|---|---|---|---|
| 1 | 22-10-22 | ELECTRICITY FOR OCTOBER | 4,124 |
| 2 | 22-11--4 | WATER FOR NOVEMBER | 3,348 |
| 3 | 22-11-14 | HOUSING FOR NOVEMBER | 12,876 |
| 4 | 22-11-21 | ATM | 70,000 |
| 5 | 22-12---7 | CARD FOR NOVEMBER | 21,000 |
| 6 | | | |
| 7 | | | |
| 8 | | | |
| 9 | | | |
| 10 | | | |
| 11 | | | |
| 12 | | | |
| 13 | | | |
| 14 | | | |
| 15 | | | |
| 16 | | | |
| 17 | | | |
| 18 | | | |
| 19 | | | |
| 20 | | | |
| 21 | | | |
| 22 | | | |
| 23 | | | |
| 24 | | | |

BOTTOM
END

FIG. 7

22

START

ACCEPT PASSBOOK — S11

SCAN PAGE
(PAGE MARK
DETECTION PROCESS — S12

SCAN PAGE
(LAST PRINTED LINE
DETECTION PROCESS — S13

PAGE MARK
CONFIRMED? — S14 → no

TURN — S16

yes

LINE REMAINING? — S15 → no

yes

PRINT — S17

EJECT — S18

END

FIG. 8

FIG. 9

START
(LAST PRINTED LINE
DETECTION PROCESS

SCAN ENTIRE OPEN
PAGE OF
PASSBOOK — S13a

DETECT PROVISIONAL
LAST LINE — S13b

ACQUIRE
TEMPERATURE
INFORMATION (t) — S13c

S13d
$20°C \leqq t < 35°C$ — no

yes

S13f
$t < -10°C$ — no

S13e
NO TEMPERATURE-
BASED
CORRECTION

yes

S13h
$-10°C \leqq t < 20°C$ — no

TEMPERATURE-
BASED
CORRECTION (X3)

yes

S13g

TEMPERATURE-
BASED
CORRECTION (Y3)

S13i

S13j
TEMPERATURE-
BASED
CORRECTION (Z3)

CALCULATE SCAN
NUMBER CORREPSONDING
TO LAST PRINTED LINE — S13k

DETECT LAST
PRINTED LINE — S13l

END

FIG. 10

FIG. 11

FIG. 12A

FIG. 12B

## FIG. 13A

```
        START
(PAGE MARK DETECTION
      PROCESS)
          │
          ▼
┌─────────────────────┐  S12a
│  SCAN ENTIRE OPEN   │
│     PAGE OF         │
│     PASSBOOK        │
└─────────────────────┘
          │
          ▼
┌─────────────────────┐  S112a
│    CALCULATE        │
│   ENLARGEMENT       │
│      RATIO          │
└─────────────────────┘
          │
          ▼
┌─────────────────────┐  S112k
│  DETERMINE PAGE     │
│  MARK DETECTION     │
│      AREA           │
└─────────────────────┘
          │
          ▼
┌─────────────────────┐  S12k
│   DETECT PAGE       │
│      MARK           │
└─────────────────────┘
          │
          ▼
       ( END )
```

## FIG. 13B

```
        START
(LAST PRINTED LINE
 DETECTION PROCESS)
          │
          ▼
┌─────────────────────┐  S13a
│  SCAN ENTIRE OPEN   │
│  PAGE OF PASSBOOK   │
└─────────────────────┘
          │
          ▼
┌─────────────────────┐  S13b
│ DETECT PROVISIONAL  │
│     LAST LINE       │
└─────────────────────┘
          │
          ▼
┌─────────────────────┐  S113a
│    CALCULATE        │
│ ENLARGEMENT RATIO   │
└─────────────────────┘
          │
          ▼
┌─────────────────────┐  S113k
│ CALCULATE SCAN NUMBER│
│ CORREPSONDING LAST  │
│    PRINTED LINE     │
└─────────────────────┘
          │
          ▼
┌─────────────────────┐  S13l
│ DETECT LAST PRINTED │
│        LINE         │
└─────────────────────┘
          │
          ▼
       ( END )
```

**EP 2 518 990 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0977423 A2

- JP 111130298 B